# EUROPÄISCHE PATENTSCHRIFT

(11) **EP 3 756 934 B1**
(45) Veröffentlichungstag und Bekanntmachung des Hinweises auf die Patenterteilung: **07.06.2023**
(21) Anmeldenummer: 20180507.4
(22) Anmeldetag: 17.06.2020
(51) Int. Cl.: B60L 53/51, B60L 53/52, B60L 53/54, B60L 53/57, F03D 9/00, F03D 9/19, F24S 60/20, F24S 60/30, F28D 20/00, F03G 6/00, H02S 10/12, H02S 10/20, H02J 1/00, F24S 10/30, F24S 30/452, H02J 7/35, H02J 15/00

(54) **VERFAHREN ZUM BETREIBEN EINER ENERGIEBEREITSTELLUNGSEINRICHTUNG FÜR ZUMINDEST EIN KRAFTFAHRZEUG SOWIE ENTSPRECHENDE ENERGIEBEREITSTELLUNGSEINRICHTUNG**
METHOD FOR OPERATING AN ENERGY SUPPLY DEVICE FOR AT LEAST ONE MOTOR VEHICLE AND CORRESPONDING ENERGY SUPPLY DEVICE
PROCÉDÉ DE FONCTIONNEMENT D'UN DISPOSITIF D'ALIMENTATION EN ÉNERGIE POUR AU MOINS UN VÉHICULE AUTOMOBILE ET DISPOSITIF D'ALIMENTATION EN ÉNERGIE CORRESPONDANT

(30) Priorität: 28.06.2019 DE 102019209532
(43) Veröffentlichungstag der Anmeldung: 30.12.2020
(73) Patentinhaber: Schierack, Horst, 53343 Wachtberg (DE)
(72) Erfinder: Schierack, Horst, 53343 Wachtberg (DE); Handcock, Elfie, 53343 Wachtberg (DE)
(74) Vertreter: Dietz, Christopher Friedrich

(56) Entgegenhaltungen:
- WO-A1-2016/000951
- CN-U- 205 356 219
- US-A1- 2006 192 435
- US-A1- 2008 148 732
- US-B1- 6 372 978
- US-B1- 7 471 010

## Beschreibung

Die Erfindung betrifft ein Verfahren zum Betreiben einer Energiebereitstellungseinrichtung für zumindest ein Kraftfahrzeug sowie eine Energiebereitstellungseinrichtung.

Aus dem Stand der Technik ist beispielsweise die Druckschrift DE 20 2018 002 200 U1 bekannt. Diese beschreibt eine Ladestation für elektrisch angetriebene Land-, Luft- und Wasserfahrzeuge und für stationäre Elektroenergiespeicher, mit einer Ladeeinheit, mittels der Elektroenergiespeicher der elektrisch angetriebenen Land-, Luft- und Wasserfahrzeuge und stationäre Elektroenergiespeicher aufladbar sind. Dabei ist vorgesehen, dass die Ladestation eine Elektroenergiespeichereinheit aufweist und in einem Sattelauflieger, einem Lastkraftwagen-Festaufbau, einem Lastkraftwagen-Wechselaufbau, einem Lastkraftwagen-Wechselcontainer, einem Kleintransporter, einem Lastkraftwagen-Anhänger oder einem Personenkraftwagen-Anhänger integriert ist. Die Elektroenergiespeichereinheit verfügt beispielsweise über Batteriezellen und eine Batteriezellensteuervorrichtung. Ebenso kann eine Generatoreinheit zum Aufladen der Elektroenergiespeichereinheit vorliegen, die als Dieselgenerator, Solar- oder Windkraftanlage ausgebildet ist.

Andere Beispiele von Systemen sind bekannt, die Energiebereitstellungseinrichtungen beschreiben, wobei Wasserstoff aus erneubarer Energie erzeugt wird. In US 2006/0192435 A1 wird aus Solarenergie nicht allein Wasserstoff sondern auch ein Ladestrom erzeugt, wobei die erzeugte Wärme auch für die Ladeleistung gesammelt und angewendet wird. US 6,372,978 B1 und CN205356219 U offenbaren weitere Beispiele von Energiebereitstellungseinrichtungen, die Sonnen- oder Windaufnahme-Elemente verwenden, und dazu Wärmeenergie speichern können. In US 2008/0148732 werden auch Sonnen- oder Windaufnahme-Elemente verwendet, wobei diese Elemente entlang einer Strecke abgelegt werden.

Weiterhin beschreibt die Druckschrift WO 2016/000951 A1 eine Energiespeichereinrichtung zur Zwischenspeicherung von thermischer Energie. Dabei ist ein geschlossener Speicherkreislauf vorgesehen, dem mittels einer Wärmequelle Wärme zuführbar sowie mittels eines Wärmeverbrauchers Wärme entnehmbar ist und in dem ein Fluidbehälter vorliegt, der mittels eines verlagerbaren Trennelements in eine erste Fluidspeicherkammer für kälteres Fluid und eine zweite Fluidspeicherkammer für wärmeres Fluid aufgeteilt ist, wobei in dem Speicherkreislauf wenigstens eine Pumpe vorgesehen ist, mittels welcher Fluid aus der ersten Fluidspeicherkammer in die zweite Fluidspeicherkammer und/oder umgekehrt förderbar ist.

Es ist Aufgabe der Erfindung, ein Verfahren zum Betreiben einer Energiebereitstellungseinrichtung für zumindest ein Kraftfahrzeug vorzuschlagen, welches gegenüber bekannten Verfahren Vorteile aufweist, insbesondere die Energie aus erneuerbaren Energiequellen zuverlässig und durchgehend bereitstellt, wobei das Bereitstellen auf unterschiedlichen Wegen unter Nutzung unterschiedlicher Energiearten und unterschiedlicher Übertragungswege erfolgt.

Dies wird erfindungsgemäß mit einem Verfahren zum Betreiben einer Energiebereitstellungseinrichtung für zumindest ein Kraftfahrzeug mit den Merkmalen des Anspruchs 1 erreicht. Dabei ist vorgesehen, dass an einem Stromanschluss der Energiebereitstellungseinrichtung zumindest zeitweise elektrischer Strom aus einer Stromquelle und an einem Wasserstoffanschluss der Energiebereitstellungseinrichtung zumindest zeitweise Wasserstoff aus einem Wasserstoffspeicher zum Übertragen an das zumindest eine Kraftfahrzeug bereitgestellt wird, wobei der Wasserstoff durch Elektrolyse aus Wasser unter Verwendung von elektrischem Strom aus der Stromquelle gewonnen wird, und wobei die Stromquelle einen thermischen Energiespeicher zum Zwischenspeichern von thermischer Energie aufweist, die zumindest zeitweise zum Bereitstellen des elektrischen Stroms verwendet wird.

Die Energiebereitstellungseinrichtung dient der Bereitstellung von Energie für das zumindest eine Kraftfahrzeug, also für genau ein Kraftfahrzeug oder mehrere Kraftfahrzeuge. Die Energiebereitstellungseinrichtung kann dabei dem zumindest einen Kraftfahrzeug die Energie auf unterschiedlichen Wegen bereitstellen, nämlich zum einen in Form von elektrischer Energie beziehungsweise in Form von elektrischem Strom über den Stromanschluss und zum anderen in Form von chemischer Energie über den Wasserstoffanschluss. Das zumindest eine Kraftfahrzeug ist an den Stromanschluss und/oder den Wasserstoffanschluss zum Übertragen des elektrischen Stroms und/oder des Wasserstoffs anschließbar. Das bedeutet, dass dem zumindest einen Kraftfahrzeug über den Stromanschluss elektrischer Strom und/oder über den Wasserstoffanschluss Wasserstoff zugeführt wird oder zumindest zugeführt werden kann. Beispielsweise verfügt das Kraftfahrzeug über eine Batterie zum Zwischenspeichern des über den Stromanschluss bereitgestellten elektrischen Stroms, sodass mittels der Energiebereitstellungseinrichtung die Batterie des Kraftfahrzeugs zumindest zeitweise aufgeladen wird. Zusätzlich oder alternativ verfügt das Kraftfahrzeug über einen Wasserstofftank, welchem der über den Wasserstoffanschluss bereitgestellte Wasserstoff zugeführt wird. Der Wasserstofftank wird insoweit zumindest zeitweise mit dem von der Energiebereitstellungseinrichtung bereitgestellten Wasserstoff betankt.

Selbstverständlich kann es vorgesehen sein, dass das Kraftfahrzeug sowohl die Batterie als auch den Wasserstofftank aufweist. Vorzugsweise sind jedoch mehrere Kraftfahrzeuge vorgesehen, von welchen ein erstes Kraftfahrzeug die Batterie und ein zweites Kraftfahrzeug den Wasserstofftank aufweist. Das erste Kraftfahrzeug wird nun beispielsweise zum Aufladen der Batterie an den Stromanschluss und das zweite Kraftfahrzeug zum Betanken des Wasserstofftanks an den Wasserstoffanschluss angeschlossen, wobei dies gleichzeitig oder auch zeitversetzt erfolgen kann. Die Energiebereitstellungseinrichtung ist dazu vorgesehen und ausgebildet, den elektrischen Strom an dem Stromanschluss unabhängig von einem Bereitstellen des Wasserstoffs an dem Wasserstoffanschluss bereitzustellen und umgekehrt.

Mittels des Stromanschlusses ist es folglich möglich, die Batterie des Kraftfahrzeugs, insbesondere des ersten Kraftfahrzeugs, aufzuladen, ohne dass gleichzeitig über den Wasserstoffanschluss Wasserstoff entnommen wird. Umgekehrt kann der Wasserstofftank des Kraftfahrzeugs, insbesondere des zweiten Kraftfahrzeugs, über den Wasserstoffanschluss mit Wasserstoff betankt werden, ohne dass gleichzeitig über den Stromanschluss elektrischer Strom entnommen wird. Der Stromanschluss und der Wasserstoffanschluss sind insoweit völlig unabhängig voneinander betreibbar. An den Stromanschluss und den Wasserstoffanschluss kann zudem jeweils ein einziges oder eine Mehrzahl von Kraftfahrzeugen anschließbar sein.

Der Stromanschluss kann für eine kabelgebundene und/oder oder kabellose Energieübertragung des elektrischen Stroms an das Kraftfahrzeug vorgesehen und ausgebildet sein. Beispielsweise wird also das Kraftfahrzeug konduktiv, also über wenigstens ein Kabel beziehungsweise über wenigstens eine Leitung, an den Stromanschluss angeschlossen. Zusätzlich oder alternativ verfügt der Stromanschluss über eine Drahtlosenergieübertragungseinrichtung, mittels welcher die elektrische Energie beziehungsweise der elektrische Strom drahtlos an das Kraftfahrzeug übertragbar ist.

Es zeigt sich, dass die Energiebereitstellungseinrichtung beziehungsweise das Verfahren zu ihrem Betreiben äußerst flexibel einsetzbar ist, weil die Energie auf unterschiedlichem Wege an das Kraftfahrzeug übertragen werden kann, nämlich in Form der elektrischen Energie und/oder der chemischen Energie.

Der an dem Stromanschluss bereitgestellte elektrische Strom stammt von der Stromquelle, wohingegen der an dem Wasserstoffanschluss bereitgestellte Wasserstoff aus dem Wasserstoffspeicher stammt. In anderen Worten stellt die Stromquelle den elektrischen Strom und der Wasserstoffspeicher den Wasserstoff zumindest zeitweise zur Verfügung. Der in dem Wasserstoffspeicher zwischengespeicherte Wasserstoff wird durch Elektrolyse aus Wasser gewonnen, wobei zur Gewinnung des Wasserstoffs elektrischer Strom herangezogen wird, der aus der Stromquelle stammt. Die Stromquelle stellt insoweit zumindest zeitweise elektrischen Strom zum Bereitstellen an dem Stromanschluss und zumindest zeitweise elektrischen Strom zum Durchführen der Elektrolyse zur Verfügung.

Beispielsweise wird die Elektrolyse eingeleitet, sobald ein Füllstand des Wasserstoffspeichers einen Sollfüllstand oder einen Mindestfüllstand unterschreitet, wobei letzterer kleiner ist als der Sollfüllstand. Die Elektrolyse unter Verwendung des elektrischen Stroms aus der Stromquelle wird anschließend solange durchgeführt, bis der Füllstand des Wasserstoffspeichers einen Sollfüllstand erreicht oder überschreitet. Ist dies der Fall, so wird das Durchführen der Elektrolyse beendet. Schlussendlich ist die Stromquelle der Energiebereitstellungseinrichtung derart ausgestaltet, dass der von ihr bereitgestellte elektrische Strom sowohl über den Stromanschluss dem Kraftfahrzeug zuführbar ist beziehungsweise zumindest zeitweise zugeführt wird und zur Gewinnung des Wasserstoffs durch Elektrolyse heranziehbar ist beziehungsweise zumindest zeitweise herangezogen wird.

Um stets und im Wesentlichen unabhängig von Umgebungsbedingungen das Bereitstellen des elektrischen Stroms und letztlich auch des Wasserstoffs sicherzustellen, weist die Stromquelle den thermischen Energiespeicher auf. Der thermische Energiespeicher ist zum Zwischenspeichern von thermischer Energie vorgesehen und ausgebildet, also dem Zwischenspeichern von Wärmeenergie. Bei einem Beladen des thermischen Energiespeichers wird diesem thermische Energie zugeführt und bei einem Entladen thermische Energie entnommen. Die thermische Energie für das Beladen des thermischen Energiespeichers kann beispielsweise zumindest zeitweise mittels des elektrischen Stroms erzeugt werden. Umgekehrt ist es vorgesehen, die thermische Energie zumindest zeitweise zum Bereitstellen des elektrischen Stroms zu verwenden, welcher zumindest zeitweise an dem Stromanschluss bereitgestellt und zumindest zeitweise zum Durchführen der Elektrolyse herangezogen wird.

Die Stromquelle weist entsprechend Mittel zum Umwandeln der thermischen Energie in elektrische Energie beziehungsweise elektrischen Strom auf. Der thermische Energiespeicher verfügt über eine Kapazität für thermische Energie von beispielsweise mindestens 500 kWh, mindestens 1.000 kWh, mindestens 2.000 kWh oder mindestens 4.000 kWh auf. Insbesondere ist die Speicherkapazität des thermischen Energiespeichers derart bemessen, dass die in ihm zwischenspeicherbare thermische Energie hinreichend ist, um mindestens 500 kWh, mindestens 1.000 kWh, mindestens 2.000 kWh oder mindestens 4.000 kWh elektrischer Energie beziehungsweise elektrischen Stroms zur Verfügung zu stellen, insbesondere an dem Stromanschluss und/oder zur Durchführung der Elektrolyse.

Der thermische Energiespeicher stellt eine äußerst gute Verfügbarkeit von elektrischem Strom und/oder Wasserstoff an der Energiebereitstellungseinrichtung für das zumindest eine Kraftfahrzeug sicher. Aufgrund des thermischen Energiespeichers ist die Energiebereitstellungseinrichtung in besonderem Maße dazu geeignet, erneuerbare Energie, beispielsweise solare Energie und/oder Windenergie, zum Bereitstellen des elektrischen Stroms an dem Stromanschluss und/oder zum Durchführen der Elektrolyse heranzuziehen.

Weiterhin sieht die Erfindung vor, dass die thermische Energie in dem Energiespeicher mittels eines Wärmeträgermediums gespeichert wird. In anderen Worten wird bei dem Beladen des thermischen Energiespeichers die thermische Energie dem Wärmeträgermedium zugeführt und bei dem Entladen des thermischen Energiespeichers entnommen. Das Wärmeträgermedium kann grundsätzlich beliebiger Natur sein. Besonders bevorzugt liegt es jedoch zumindest zeitweise in flüssigem Zustand, insbesondere durchgehend in flüssigem Zustand vor. Beispielsweise wird Wasser als Wärmeträgermedium verwendet. Dies hat den Vorteil, dass das Wärmeträgermedium kostengünstig und gut verfügbar ist. Der in dem thermischen Energiespeicher vorliegende Druck des Wärmeträgermediums ist beispielsweise derart gewählt, dass innerhalb eines Betriebstemperaturbereichs des thermischen Energiespeichers das Wärmeträgermedium stets in flüssigem Aggregatzustand vorliegt. Der Betriebstemperaturbereich des thermischen Energiespeichers erstreckt sich beispielsweise bis zu einer Temperatur von höchstens 500 °C, höchstens 400 °C oder höchstens 300 °C.

Beispielsweise ist der thermische Energiespeicher wie die in der Druckschrift WO 2016/000951 A1 beschriebene Energiespeichereinrichtung ausgestaltet, insbesondere gemäß einem der Ansprüche der genannten Druckschrift. Das bedeutet schlussendlich, dass der Energiespeicher zur Zwischenspeicherung von thermischer Energie vorgesehen und ausgebildet ist und sich durch einen geschlossenen Speicherkreislauf auszeichnet, dem mittels einer Wärmequelle Wärme zuführbar sowie mittels eines Wärmeverbrauchers Wärme entnehmbar ist und in dem ein Fluidbehälter vorliegt, der mittels eines verlagerbaren Trennelements in eine erste Fluidspeicherkammer für kälteres Fluid und eine zweite Fluidspeicherkammer für wärmeres Fluid aufgeteilt ist, wobei in dem Speicherkreislauf wenigstens eine Pumpe vorgesehen ist, mittels welcher Fluid aus der ersten Fluidspeicherkammer in die zweite Fluidspeicherkammer und/oder umgekehrt förderbar ist. Der Fluidbehälter ist besonders bevorzugt als Rohrleitung ausgestaltet, welcher beispielsweise waagerecht angeordnet ist.

Der Fluidbehälter verfügt beispielsweise über eine wenigstens bereichsweise gekrümmte Längsmittelachse, sodass der Fluidbehälter zum Beispiel U-förmig oder O-förmig ist. Die Rohrleitung zeichnet sich insbesondere dadurch aus, dass sie ein Verhältnis zwischen Länge und Breite beziehungsweise Durchmesser von mindestens 5 aufweist. Der thermische Energiespeicher ist besonders bevorzugt unterirdisch angeordnet, also unter einer Bodenfläche, insbesondere unter einer Bodenfläche, auf oder über welcher der Stromanschluss und/oder der Wasserstoffanschluss der Energiebereitstellungseinrichtung angeordnet sind. Die Energiebereitstellungseinrichtung kann sich insoweit aus einem unterirdischen Teil und einem oberirdischen Teil zusammensetzen, wobei der unterirdische Teil insbesondere den thermischen Energiespeicher und der oberirdische Teil insbesondere den Stromanschluss und den Wasserstoffanschluss aufweist.

Eine Weiterbildung der Erfindung sieht vor, dass die Stromquelle wenigstens eine Stromerzeugungseinrichtung zum regenerativen Bereitstellen von elektrischem Strom aufweist, wobei der mittels der Stromerzeugungseinrichtung bereitgestellte elektrische Strom zumindest zeitweise an dem Stromanschluss bereitgestellt und zumindest zeitweise zum Gewinnen des Wasserstoffs durch Elektrolyse verwendet wird. Die Stromerzeugungseinrichtung dient dem Bereitstellen des elektrischen Stroms aus einer regenerativen Energiequelle, beispielsweise aus solarer Energie und/oder aus Windenergie. Insoweit dient sie zum regenerativen Bereitstellen des elektrischen Stroms.

Der von der Stromerzeugungseinrichtung bereitgestellte elektrische Strom wird nun zumindest zeitweise an dem Stromanschluss bereitgestellt, insbesondere unmittelbar bereitgestellt. Unter dem unmittelbaren Bereitstellen ist zu verstehen, dass der elektrische Strom nicht über den thermischen Energiespeicher bereitgestellt wird, also nicht aus der in dem thermischen Energiespeicher zwischengespeicherten thermischen Energie gewonnen wird. Vielmehr soll der mittels der Stromerzeugungseinrichtung erzeugte elektrische Strom unter Umgehung des thermischen Energiespeichers unmittelbar an dem Stromanschluss zur Verfügung stehen, um das zumindest eine Kraftfahrzeug mit elektrischem Strom zu versorgen.

Zusätzlich ist es vorgesehen, den bereitgestellten elektrischen Strom zeitweise zum Durchführen der Elektrolyse heranzuziehen, wobei dies vorzugsweise ebenfalls unmittelbar erfolgt, also unter Umgehung des thermischen Energiespeichers. Hierdurch wird ein besonders hoher Wirkungsgrad der Energiebereitstellungseinrichtung erzielt. Beispielsweise ist es vorgesehen, den Strombedarf des Stromanschlusses beziehungsweise den Strombedarf des an diesen angeschlossenen wenigstens einen Kraftfahrzeugs zunächst vollständig mittels des elektrischen Stroms zu decken, der mittels der Stromerzeugungseinrichtung bereitgestellt wird, wobei dieser elektrische Strom unmittelbar an dem Stromanschluss zur Verfügung gestellt wird. Liegt ein Stromüberschuss vor, stellt also die Stromerzeugungseinrichtung mehr elektrischen Strom zur Verfügung, als an dem Stromanschluss benötigt, so wird der überschüssige elektrische Strom zum Durchführen der Elektrolyse und mithin zum Gewinnen des Wasserstoffs herangezogen. Dies erhöht die Effizienz der Energiebereitstellungseinrichtung weiter.

Eine Weiterbildung der Erfindung sieht vor, dass der mittels der Stromerzeugungseinrichtung bereitgestellte elektrische Strom zumindest zeitweise zum Erwärmen des Wärmeträgermediums mittels einer Heizeinrichtung verwendet wird. In anderen Worten wird der elektrische Strom zum Beladen des thermischen Energiespeichers mit thermischer Energie herangezogen. Entsprechend wird der elektrische Strom für eine spätere Verwendung zwischengespeichert. Zum Erwärmen des Wärmeträgermediums liegt die Heizeinrichtung vor, welche zum Erwärmen des Wärmeträgermediums mit dem elektrischen Strom betrieben wird. Besonders bevorzugt erfolgt das Erwärmen des Wärmeträgermediums mithilfe des elektrischen Stroms dann, insbesondere nur dann, falls die elektrische Energie nicht an dem Stromanschluss oder zum Gewinnen des Wasserstoffs benötigt wird.

Beispielsweise wird zum Erwärmen des Wärmeträgermediums allenfalls überschüssiger elektrischer Strom verwendet, der nicht an dem Stromanschluss benötigt wird. Besonders bevorzugt wird das Erwärmen des Wärmeträgermediums zudem lediglich dann vorgenommen, wenn der elektrische Strom nicht für das Durchführen der Elektrolyse verwendet wird oder werden kann, insbesondere falls der Wasserstoffspeicher bereits vollständig gefüllt ist oder kein Wasser zum Herstellen des Wasserstoffs zur Verfügung steht. Insoweit wird der nicht benötigte elektrische Strom zur späteren Verwendung in dem thermischen Energiespeicher zwischengespeichert, sodass ein dauerhaftes Bereitstellen von Energie in Form des elektrischen Stroms und des Wasserstoffs mittels der Energiebereitstellungseinrichtung sichergestellt ist.

Eine Weiterbildung der Erfindung sieht vor, dass die Stromerzeugungseinrichtung den elektrischen Strom mittels wenigstens einer Windkraftanlage und/oder wenigstens eines Solarmoduls bereitstellt. Die Stromerzeugungseinrichtung verfügt insoweit über die wenigstens eine Windkraftanlage beziehungsweise das wenigstens eine Solarmodul. Die Windkraftanlage dient der Umwandlung von Strömungsenergie der Luft in elektrische Energie. Hierzu verfügt die Windkraftanlage über wenigstens einen Rotor, der derart ausgebildet und angeordnet ist, dass er von einer Luftströmung in eine Drehbewegung versetzt wird. Der Rotor ist mit einem Generator gekoppelt, welcher die Drehbewegung, also die mechanische beziehungsweise kinetische Energie des Rotors, in elektrische Energie umsetzt. Das Solarmodul hingegen dient der unmittelbaren Umsetzung von solarer Energie in elektrischen Strom. Das Solarmodul kann auch als Solarzelle oder als photovoltaische Zelle bezeichnet werden, weil sie den photovoltaischen Effekt zum Bereitstellen des elektrischen Stroms nutzt. Die Verwendung der Windkraftanlage und/oder des Solarmoduls hat den Vorteil eines guten Wirkungsgrads für das Bereitstellen des elektrischen Stroms an dem Stromanschluss.

Eine Weiterbildung der Erfindung sieht vor, dass die Stromquelle wenigstens eine Solarkollektoreinrichtung aufweist, die zumindest zeitweise zum Erwärmen des Wärmeträgermediums und/oder dem Bereitstellen des elektrischen Stroms mittels solarer Wärme betrieben wird. Die Solarkollektoreinrichtung dient dem Umwandeln von solarer Energie, also von Sonnenstrahlung, in thermische Energie. Die Solarkollektoreinrichtung verfügt hierzu beispielsweise über einen oder mehrere Solarkollektoren. Die mithilfe der Solarkollektoreinrichtung bereitgestellte thermische Energie wird zum Erwärmen des Wärmeträgermediums und/oder dem Bereitstellen des elektrischen Stroms verwendet. In ersterem Fall wird die thermische Energie der Solarkollektoreinrichtung dem thermischen Energiespeicher, insbesondere dem Wärmeträgermedium, zugeführt. Beispielsweise erfolgt dies, indem erwärmtes Wärmeträgermedium aus der Solarkollektoreinrichtung in den thermischen Energiespeicher eingebracht wird.

Umgekehrt kann kühleres Wärmeträgermedium aus dem Energiespeicher der Solarkollektoreinrichtung zum Erwärmen zugeführt werden. Selbstverständlich ist es jedoch alternativ möglich, die von der Solarkollektoreinrichtung bereitgestellte thermische Energie dem thermischen Energiespeicher über einen Wärmeübertrager zuzuführen. Dieser Wärmeübertrager wird beispielsweise einerseits von dem Wärmeträgermedium des Energiespeichers und andererseits von einem Wärmeträgermedium der Solarkollektoreinrichtung durchströmt, sodass thermische Energie von dem Wärmeträgermedium der Solarkollektoreinrichtung auf das Wärmeträgermedium des Energiespeichers übertragen wird und dieses erwärmt.

Zusätzlich oder alternativ kann die mithilfe der Solarkollektoreinrichtung bereitgestellt thermische Energie zum Bereitstellen des elektrischen Stroms herangezogen werden. Hierzu wird die thermische Energie der Solarkollektoreinrichtung beispielsweise mittels einer Turbine, insbesondere einer Dampfturbine, in elektrischen Strom umgesetzt. Es kann hierbei vorgesehen sein, die mittels der Solarkollektoreinrichtung bereitgestellte thermische Energie unmittelbar der Turbine zuzuführen, also unter Umgehung des thermischen Energiespeichers. Alternativ kann es jedoch vorgesehen sein, die thermische Energie der Solarkollektoreinrichtung zunächst dem thermischen Energiespeicher zuzuführen und anschließend diesem thermische Energie zu entnehmen, um mittels der Turbine elektrische Energie bereitzustellen. Insgesamt wird mit dieser Vorgehensweise eine besonders hohe Flexibilität erzielt.

Besonders vorteilhaft sind sowohl die Windkraftanlage als auch die Solarkollektoreinrichtung und/oder das Solarmodul realisiert. Sie können beispielsweise gemeinsam an einem Speicherturm angeordnet sein. Der Speicherturm ist beispielsweise Bestandteil einer Fluidspeichervorrichtung, welche wiederum Bestandteil der Energiebereitstellungseinrichtung sein kann. Auf die Fluidspeichervorrichtung und den Speicherturm wird im Rahmen dieser Beschreibung noch eingegangen werden.

Eine Weiterbildung der Erfindung sieht vor, dass das Bereitstellen des elektrischen Stroms unter Verwendung der thermischen Energie und/oder der solaren Wärme mittels wenigstens einer Dampfturbine erfolgt. Hierauf wurde bereits hingewiesen. Der Dampfturbine wird beispielsweise ein mittels der thermischen Energie und/oder der solaren Wärme erwärmtes Arbeitsfluid zugeführt und zu deren Antreiben verwendet. Die Dampfturbine ist mit einem Generator gekoppelt, welcher schlussendlich den elektrischen Strom erzeugt. Das Arbeitsfluid kann dem Wärmeträgermedium entsprechen oder von diesem verschieden sein. Beispielsweise wird als Arbeitsfluid ein Fluid verwendet, welches einen niedrigen Siedepunkt aufweist als das Wärmeträgermedium. Die Verwendung der Dampfturbine zum Bereitstellen des elektrischen Stroms hat den Vorteil einer hohen Effizienz der Energiebereitstellungseinrichtung.

Eine Weiterbildung der Erfindung sieht vor, dass bei einer Entnahme von elektrischem Strom über den Stromanschluss mit einer Entnahmeleistung der elektrische Strom bis zu einer Leistungsgrenze mittels der Stromerzeugungseinrichtung bereitgestellt wird und bei Überschreiten der Leistungsgrenze durch die Entnahmeleistung elektrische Energie mit einer der Differenz zwischen der Entnahmeleistung und der Leistungsgrenze entsprechenden Differenzleistung mittels der in den thermischen Energiespeicher zwischengespeicherten thermischen Energie und/oder mittels des in dem Wasserstoffspeicher zwischengespeicherten Wasserstoffs zusätzlich bereitgestellt wird. Die Leistung, mit welcher der elektrische Strom von dem Stromanschluss an das zumindest eine Kraftfahrzeug übertragen wird, wird als Entnahmeleistung bezeichnet. Liegt die Entnahmeleistung über der Leistungsgrenze, welche beispielsweise die Leistung der momentan mittels der Stromerzeugungseinrichtung bereitgestellten Leistung entspricht, so wird die Differenzleistung auf anderem Wege bereitgestellt.

In anderen Worten wird der Stromanschluss über die mittels der Stromerzeugungseinrichtung bereitstellbaren Leistung hinaus mit elektrischem Strom versorgt. Unter der Differenzleistung ist hierbei diejenige Leistung zu verstehen, um welche die Entnahmeleistung die Leistungsgrenze übersteigt. Die Differenzleistung kann unter Verwendung der thermischen Energie und/oder des Wasserstoffs bereitgestellt werden. Bei Verwendung der thermischen Energie wird die in dem thermischen Energiespeicher zwischengespeicherte thermische Energie in elektrischen Strom umgewandelt, insbesondere mithilfe der Dampfturbine. Zusätzlich oder alternativ wird der in dem Wasserstoffspeicher zwischengespeicherte Wasserstoff zum Bereitstellen der Differenzleistung herangezogen. Vorzugsweise wird hierbei der Wasserstoff einer Brennstoffzelle zum Bereitstellen von elektrischem Strom zugeführt.

Besonders bevorzugt ist es vorgesehen, bei Übersteigen der Leistungsgrenze durch die Entnahmeleistung zunächst die thermische Energie zum Bereitstellen der Differenzleistung zu verwenden. Erst wenn die thermische Energie nicht ausreicht oder mittels der Dampfturbine allein die Differenzleistung nicht erbracht werden kann, so wird zusätzlich der Wasserstoff zum Bereitstellen von elektrischem Strom verwendet, insbesondere hierzu der Brennstoffstelle zugeführt. Mit einer derartigen Vorgehensweise kann über den Stromanschluss eine sehr hohe Spitzenleistung bereitgestellt werden, beispielsweise zum Versorgen einer Vielzahl von Kraftfahrzeugen mit elektrischem Strom aus dem Stromanschluss.

Weiterhin sieht die Erfindung auch vor, dass der Wasserstoff bei einer Entnahme über den Wasserstoffanschluss aus dem Wasserstoffspeicher bereitgestellt wird, dessen Füllstand während und/oder nach der Entnahme auf einen Sollfüllstand geregelt wird. Der Füllstand beschreibt die momentane Menge an Wasserstoff, die sich in dem Wasserstoffspeicher befindet. Weil der Füllstand sich bei der Entnahme von Wasserstoff aus dem Wasserstoffspeicher verringert oder zumindest verringern würde, soll der Füllstand auf den Sollfüllstand geregelt werden. Der Sollfüllstand entspricht beispielsweise dem Füllstand des vollständig gefüllten Wasserstoffspeichers. Es kann also beispielsweise vorgesehen sein, dem Wasserstoffspeicher einerseits Wasserstoff zu entnehmen und dem Wasserstoffanschluss zuzuführen sowie andererseits dem Wasserstoffspeicher Wasserstoff zuzuführen, welcher durch Elektrolyse aus Wasser gewonnen wird. Dieses Zuführen kann gleichzeitig mit dem Entnehmen erfolgen. Zusätzlich oder alternativ erfolgt es nach dem Entnehmen. Hierdurch wird sichergestellt, dass stets eine hinreichende Menge an Wasserstoff in dem Wasserstoffspeicher zur Entnahme über den Wasserstoffanschluss zur Verfügung steht.

Die Erfindung betrifft weiterhin eine Energiebereitstellungseinrichtung für zumindest ein Kraftfahrzeug, insbesondere zur Durchführung des Verfahrens gemäß den Ausführungen im Rahmen dieser Beschreibung. Dabei ist vorgesehen, dass die Energiebereitstellungseinrichtung dazu vorgesehen und ausgebildet ist, an einem Stromanschluss der Energiebereitstellungeinrichtung zumindest zeitweise elektrischen Strom aus einer Stromquelle und an einem Wasserstoffanschluss der Energiebereitstellungseinrichtung zumindest zeitweise Wasserstoff aus einem Wasserstoffspeicher zur Übertragung an das zumindest eine Kraftfahrzeug bereitzustellen, wobei der Wasserstoff durch Elektrolyse aus Wasser unter Verwendung von elektrischem Strom aus der Stromquelle gewonnen wird, und wobei die Stromquelle einen thermischen Energiespeicher zum Zwischenspeichern von thermischer Energie aufweist, die zumindest zeitweise zum Bereitstellen des elektrischen Stroms verwendet wird.

Auf die Vorteile einer derartigen Ausgestaltung der Energiebereitstellungseinrichtung beziehungsweise einer derartigen Vorgehensweise wurde bereits hingewiesen. Sowohl die Energiebereitstellungseinrichtung als auch das Verfahren zu ihrem Betreiben können gemäß den Ausführungen im Rahmen dieser Beschreibung weitergebildet sein, sodass insoweit auf diese verwiesen wird.

Erneut sei darauf hingewiesen, dass der Energiespeicher gemäß der Druckschrift WO 2016/000951 A1 ausgebildet sein kann, wobei der thermische Energiespeicher der dort beschriebenen Energiespeichereinrichtung entspricht. Das Wärmeträgermedium ist das in der genannten Druckschrift beschriebene Fluid. Es wird ausdrücklich auf die gesamte Offenbarung der genannten Druckschrift Bezug genommen, insbesondere auf die Patentansprüche. Beispielsweise ist der thermische Energiespeicher gemäß einem der Patentansprüche 1 bis 9 der Druckschrift ausgestaltet.

Der Wasserstoffspeicher kann zudem Bestandteil einer Fluidspeichervorrichtung für die Energiebereitstellungseinrichtung sein. Diese zeichnet sich durch eine erste Tankanordnung für ein erstes Fluid und eine zweite Tankanordnung für ein zweites Fluid aus, wobei die erste Tankanordnung einen ersten Speichertank in einem mittels einer Gründung verankerten, sich in axialer Richtung bezüglich seiner Längsmittelachse in die Gründung hinein erstreckenden Speicherturm und die zweite Tankanordnung mehrere separat angeordnete zweite Speichertanks aufweist, die in Umfangsrichtung um den Speicherturm verteilt angeordnet, zur Versteifung des Speicherturms an diesem befestigt und sich an der Gründung abstützen und/oder an dieser befestigt sind und/oder mehrfach an dem Speicherturm befestigt sind.

Die Energiebereitstellungseinrichtung dient zur Bereitstellung des elektrischen Stroms sowie des Wasserstoffs. Im Rahmen der Energiebereitstellungseinrichtung wird vorzugsweise regenerative Energie, insbesondere solare Energie und/oder Windenergie, zur Erzeugung und nachfolgenden Bereitstellung des Wasserstoffs und/oder zur Bereitstellung des elektrischen Stroms herangezogen. Beispielsweise ist es vorgesehen, die regenerative Energie entweder unmittelbar in den elektrischen Strom umzuwandeln oder die regenerative Energie zum Erzeugen von Wasserstoff zu nutzen. Selberverständlich kann es auch vorgesehen sein, die regenerative Energie - in Abhängigkeit von ihrer Verfügbarkeit - teilweise zur Bereitstellung des elektrischen Stroms und teilweise zum Erzeugen des Wasserstoffs heranzuziehen. Weil der Wasserstoff durch Elektrolyse aus Wasser gewonnen wird, fällt bei dem Erzeugen des Wasserstoffs zusätzlich Sauerstoff an.

Der Wasserstoff und der Sauerstoff, welche unter dem Einsatz der regenerativen Energie erzeugt wurden, können ebenfalls zur Bereitstellung des elektrischen Stroms verwendet werden, insbesondere falls momentan keine regenerative Energie oder zu wenig regenerative Energie zur unmittelbaren Bereitstellung des elektrischen Stroms verfügbar ist. Bevorzugt werden der Wasserstoff und der Sauerstoff mithilfe der Fluidspeichervorrichtung zwischengespeichert. Beispielsweise ist es vorgesehen, im Falle eines Überschusses von regenerativer Energie diese zumindest teilweise zur Erzeugung von Wasserstoff und Sauerstoff zu verwenden. Der Wasserstoff und der Sauerstoff werden in der Fluidspeichervorrichtung gespeichert, insbesondere bei Überdruck, also einem Druck, der höher ist als ein Umgebungsdruck. Liegt nachfolgend ein Mangel an regenerativer Energie vor, kann also der Bedarf an elektrischem Strom nicht oder zumindest nicht allein mittels der regenerativen Energie gedeckt werden, so werden der Wasserstoff und der Sauerstoff der Fluidspeichervorrichtung entnommen und zur zumindest teilweisen oder vollständigen Bereitstellung des elektrischen Stroms herangezogen.

In einer bevorzugten Ausgestaltung ist die Energiebereitstellungseinrichtung zur Nutzung mehrerer, insbesondere unterschiedlicher, regenerativer Energiequellen vorgesehen und ausgebildet. Beispielsweise verfügt die Energiebereitstellungseinrichtung über eine Einrichtung zur Nutzung solarer Energie sowie eine Einrichtung zur Nutzung von Windkraft. Die Einrichtung zur Nutzung solarer Energie kann auch als Solarnutzungseinrichtung bezeichnet werden. Die Solarnutzungseinrichtung weist beispielsweise die Solarkollektoreinrichtung, insbesondere einen Parabolkollektor, und/oder wenigstens ein Solarmodul beziehungsweise eine Solarzelle auf. Die Einrichtung zur Nutzung von Windkraft kann auch als Windkraftanlage bezeichnet werden.

Die Fluidspeichervorrichtung ist Bestandteil der Energiebereitstellungseinrichtung. Sie ist kompakt und platzsparend ausgebildet und kann zudem zur Halterung der Solarnutzungseinrichtung und/oder der Windkraftanlage herangezogen werden. Die Fluidspeichervorrichtung verfügt über mehrere Tankanordnungen für mehrere Fluide, nämlich über die erste Tankanordnung für das erste Fluid und die zweite Tankanordnung für das zweite Fluid. Die erste Tankanordnung ist zur Zwischenspeicherung des ersten Fluids und die zweite Tankanordnung zur Zwischenspeicherung des zweiten Fluids vorgesehen und ausgebildet. Das erste Fluid ist hierbei vorzugsweise der Wasserstoff und das zweite Fluid vorzugsweise der Sauerstoff. Das bedeutet, dass der erste Speichertank dem Wasserstoffspeicher entspricht.

Die erste Tankanordnung weist den ersten Speichertank auf, vorzugsweise genau einen ersten Speichertank. Das für das erste Fluid von der Fluidspeichervorrichtung bereitgestellte Speichervolumen wird also allein mittels des einen ersten Speichertanks bereitgestellt. Die zweite Tankanordnung verfügt hingegen über mehrere separate zweite Speichertanks, sodass das von der Fluidspeichervorrichtung für das zweite Fluid bereitgestellte Speichervolumen von den mehreren zweiten Speichertanks gemeinsam bereitgestellt wird. Beispielsweise entspricht das Speichervolumen der Fluidspeichervorrichtung für das erste Fluid zumindest dem Speichervolumen für das zweite Fluid, bevorzugt ist jedoch das Speichervolumen für das erste Fluid größer als das Speichervolumen für das zweite Fluid. Besonders bevorzugt ist das Speichervolumen für das erste Fluid mindestens 50 %, mindestens 75 % oder mindestens 100 % größer als das Speichervolumen für das zweite Fluid. Bevorzugt entspricht das Verhältnis zwischen dem Speichervolumen für das erste Fluid und dem Speichervolumen für das zweite Fluid dem Volumenverhältnis zwischen dem bei der Elektrolyse anfallenden Wasserstoff und Sauerstoff.

Der erste Speichertank liegt in dem Speicherturm vor, welcher wiederum mit der Gründung verbunden ist. Beispielsweise stützt sich der Speicherturm über einen Tragring an der Gründung ab. Der Tragring ist an dem Speicherturm befestigt, beispielsweise mit ihm verschweißt und/oder verschraubt. Der Tragring ist vorzugsweise in Umfangsrichtung durchgehend an dem Speicherturm ausgebildet, umgreift diesen also vollständig. Der erste Speichertank wird von einer Wand des Speicherturms begrenzt beziehungsweise eingeschlossen. Die Gründung dient der ortsfesten Anordnung und Befestigung des Speicherturms bezüglich eines Untergrunds. Bevorzugt weist der Speicherturm einen zylindrischen, insbesondere einen kreiszylindrischen, Querschnitt auf. Besonders bevorzugt besteht er zumindest bereichsweise aus Metall, insbesondere setzt er sich aus wenigstens einem Metallrohr, bevorzugt mehreren miteinander verbundenen Metallrohren, zusammen. Die Metallrohre sind endseitig jeweils mittels eines Deckels verschlossen. Das bedeutet, dass der Speicherturm und entsprechend der erste Speichertank der ersten Tankanordnung aus Standardkomponenten auf besonders kostengünstige Art und Weise aufgebaut werden kann. Die Gründung weist beispielsweise ein Fundament auf, welches bevorzugt aus Beton besteht. Es kann jedoch alternativ auch ein anderes Material für das Fundament verwendet werden. In jedem Fall stützt sich der Speicherturm über die Gründung, insbesondere über das Fundament, an dem Untergrund ab.

Um eine besonders hohe Standfestigkeit des Speicherturms zu erzielen, greift der Speicherturm in die Gründung ein. Das bedeutet, dass der Speicherturm vorzugsweise in axialer Richtung einerseits in den Untergrund, auf oder in welchem die Gründung angeordnet ist, oder zumindest in die Gründung eingreift, und andererseits sich in die von dem Untergrund beziehungsweise die Gründung abgewandte Richtung erstreckt. Die Gründung kann in oder auf dem Untergrund angeordnet sein. Beispielsweise stützt sich der Speicherturm über eine Stützzarge der Gründung an dem Untergrund ab. Unter der Stützzarge ist zum Beispiel ein hohlzylindrisches, insbesondere hohlkreiszylindrisches Stützteil zu verstehen, in welches der Speicherturm eingreift. Bevorzugt stützt sich der Speicherturm mit dem vorstehend erwähnten Tragring an einer Stirnseite der Stützzarge ab, nämlich auf ihrer dem Untergrund abgewandten Seite. Mit jeder der beschriebenen Ausgestaltungen wird zum einen eine günstigere Schwerpunktlage des Speicherturms erzielt. Andererseits ergeben sich weitere Vorteile, auf welche nachfolgend noch eingegangen werden wird.

Um die Steifigkeit des Speicherturms zu erhöhen, sind die mehreren zweiten Speichertanks um den Speicherturm verteilt angeordnet und an diesem befestigt. Beispielsweise sind die zweiten Speichertanks jeweils einerseits an dem Speicherturm und andererseits an der Gründung befestigt oder stützen sich zumindest an dieser ab. Durch das Abstützen der zweiten Speichertanks an der Gründung wird die Aufstandsfläche des Speicherturms auf der Gründung deutlich vergrößert. Sind zudem die zweiten Speichertanks an der Gründung befestigt, beispielsweise mittels einer Schraub- oder Bolzenverbindung, so ist eine verbesserte Standfestigkeit des Speicherturms realisiert. Alternativ oder zusätzlich kann es vorgesehen sein, dass die zweiten Speichertanks jeweils mehrfach an dem Speicherturm befestigt sind, insbesondere an voneinander beabstandeten Befestigungsstellen. Hierdurch wird eine deutliche Erhöhung der Steifigkeit des Speicherturms erzielt. In jedem Fall kann die Befestigung der zweiten Speichertanks an dem Speicherturm stoffschlüssig und/oder formschlüssig erfolgen, beispielsweise durch eine Schweißverbindung und/oder mittels einer Schraub- oder Bolzenverbindung. Insbesondere sind an dem Speicherturm Befestigungsflansche angeschweißt, an welchen die zweiten Speichertanks mittels Schrauben oder Bolzen befestigt sind. Zusätzlich oder alternativ kann es vorgesehen sein, dass zumindest ein Teil der zweiten Speichertanks oder alle zweiten Speichertanks lösbar an dem Speicherturm befestigt sind, insbesondere zu Wartungs- und/oder Inspektionszwecken.

Der erste Speichertank ist beispielsweise zur Aufnahme des ersten Fluids unter einem Druck von mindestens 100 bar, mindestens 150 bar, mindestens 200 bar, mindestens 250 bar oder mindestens 300 bar ausgebildet. Die zweiten Speichertanks sind vorzugsweise derart ausgebildet, dass sie zur Aufnahme des zweiten Fluids bei demselben Druck geeignet sind. In anderen Worten sollen der erste Speichertank und die zweiten Speichertanks derart ausgestaltet sein, dass das jeweilige Fluid in ihnen mit demselben maximalen Druck vorliegen kann. Insbesondere sind der erste Speichertank und die zweiten Speichertanks druckfest bis hin zu den genannten Drücken.

In axialer Richtung bezüglich der Längsmittelachse des Speicherturms gesehen weist dieser ausgehend von der Gründung in die von dem Untergrund abgewandte Richtung erste Abmessungen auf, wohingegen der in die Gründung eingreifende Teil des Speicherturms in axialer Richtung zweite Abmessungen aufweist. Die ersten Abmessungen sind größer als die zweiten Abmessungen, beispielsweise um einen Faktor von mindestens 5, mindestens 7,5, mindestens 10, mindestens 11, mindestens 12, mindestens 13, mindestens 14 oder mindestens 15. Beispielsweise weist der Speicherturm insgesamt in axialer Richtung Abmessungen von mindestens 20 m, vorzugsweise mindestens 24 m auf. Hiervon sind mindestens 5 %, mindestens 7,5 % oder mindestens 10 % in der Gründung und dem Untergrund aufgenommen. Beispielsweise sind wenigstens 2 m des Speicherturms in der Gründung und dem Untergrund angeordnet.

Um trotz dieser Abmessungen eine hinreichende Festigkeit des Speicherturms bei gleichzeitig begrenzter Materialstärke des Speicherturms zu erzielen, sind die zweiten Speichertanks zur Versteifung des Speicherturms an diesem befestigt. Bevorzugt sind die zweiten Speichertanks gleichmäßig in Umfangsrichtung verteilt um den Speicherturm angeordnet. Beispielsweise sind wenigstens vier, wenigstens sechs, wenigstens acht oder wenigstens zehn zweite Speichertanks vorgesehen. Die zweiten Speichertanks sind bevorzugt derart an dem Speicherturm angeordnet, dass sie in Umfangsrichtung voneinander beabstandet angeordnet sind, also einander nicht berühren. Mit einer derartigen Ausgestaltung wird eine besonders gute Stützwirkung der zweiten Speichertanks auf den Speicherturm bewirkt.

Die zweiten Speichertanks weisen in axialer Richtung bezüglich der Längsmittelachse des Speicherturms eine Erstreckung auf, welche höchstens 50 %, höchstens 40 %, höchstens 30 %, höchstens 25 % oder höchstens 20 % der Abmessungen des Speicherturms in dieser Richtung entspricht. Bevorzugt sind die zweiten Speichertanks im Querschnitt gesehen analog zu dem ersten Speichertank beziehungsweise dem Speicherturm zylindrisch, insbesondere kreiszylindrisch. Besonders bevorzugt sind die zweiten Speichertanks jeweils wenigstens einseitig, insbesondere beidseitig, mit einem kugelkalottenförmigen Deckel beziehungsweise Endstück verschlossen. Hierdurch wird eine hohe Druckfestigkeit der zweiten Speichertanks realisiert. Auch der erste Speichertank kann in axialer Richtung gesehen wenigstens einseitig, bevorzugt beidseitig, mit einem derartigen kugelkalottenförmigen Deckel beziehungsweise Endstück verschlossen sein.

Die beschriebene Ausgestaltung der Fluidspeichervorrichtung ermöglicht eine zuverlässige und sichere Zwischenspeicherung des ersten Fluids und des zweiten Fluids bei gleichzeitig geringem Platzbedarf, insbesondere eine Zwischenspeicherung unter hohem Druck. Zudem kann die Fluidspeichervorrichtung zur Abstützung von Elementen der Fluid- und/oder Energiebereitstellungseinrichtung herangezogen werden, beispielsweise sind an dem Speicherturm eine Traganordnung für die Solarnutzungseinrichtung und/oder eine Stützanordnung für die Windkraftanlage angeordnet und befestigt. Insbesondere bei Realisierung der die Fluidspeichervorrichtung aufweisenden Fluid- und/oder Energiebereitstellungseinrichtung, die die Solarnutzungseinrichtung und/oder die Windkraftanlage aufweist, ist ein besonders ökologischer Betrieb möglich. Durch die Bereitstellung des Fluids, insbesondere Wasserstoff, und/oder der Energie mittels der Fluid- und/oder Energiebereitstellungseinrichtung ergeben sich insbesondere hinsichtlich des Kohlenstoffdioxids Emissionsvorteile gegenüber herkömmlichen Anlagen. Die Kohlenstoffdioxidbilanz der Einrichtung ist daher bereits nach kurzer Zeit positiv, im Sinne einer Verringerung des ausgestoßenen Kohlenstoffdioxids.

Eine bevorzugte weitere Ausführungsform der Erfindung sieht vor, dass in dem Speicherturm ein zu dem ersten Speichertank koaxial angeordneter dritter Speichertank für ein drittes Fluid angeordnet ist. Der dritte Speichertank ist vorzugsweise in axialer Richtung gesehen auf der dem Untergrund beziehungsweise der Bodenplatte abgewandten Seite des ersten Speichertanks angeordnet. Beispielsweise schließt sich der dritte Speichertank unmittelbar an den ersten Speichertank an und ist lediglich über eine Trennwand von diesem strömungstechnisch getrennt. Der dritte Speichertank ist besonders bevorzugt zur drucklosen Zwischenspeicherung des dritten Fluids vorgesehen und ausgebildet. Das dritte Fluid ist beispielsweise Wasser, welches im Rahmen der vorstehend bereits beschriebenen Elektrolyse in Wasserstoff und Sauerstoff aufgespaltet wird. Das Vorsehen des dritten Speichertanks ermöglicht ein besonders autarkes Betreiben der Fluid- und/oder Energiebereitstellungseinrichtung.

Eine weitere bevorzugte Ausführungsform der Erfindung sieht vor, dass der dritte Speichertank in einem zumindest bereichsweise konisch ausgebildeten Abschlusselement des Speicherturms angeordnet ist. Das Abschlusselement dient beispielsweise als Endkappe des Speicherturms. Es kann vorgesehen sein, dass über das Abschlusselement die vorstehend bereits erwähnte Windkraftanlage an dem Speicherturm befestigt ist. Die konische Ausgestaltung des Abschlusselements ermöglicht eine besonders stabile Anbindung der Windkraftanlage an den Speicherturm.

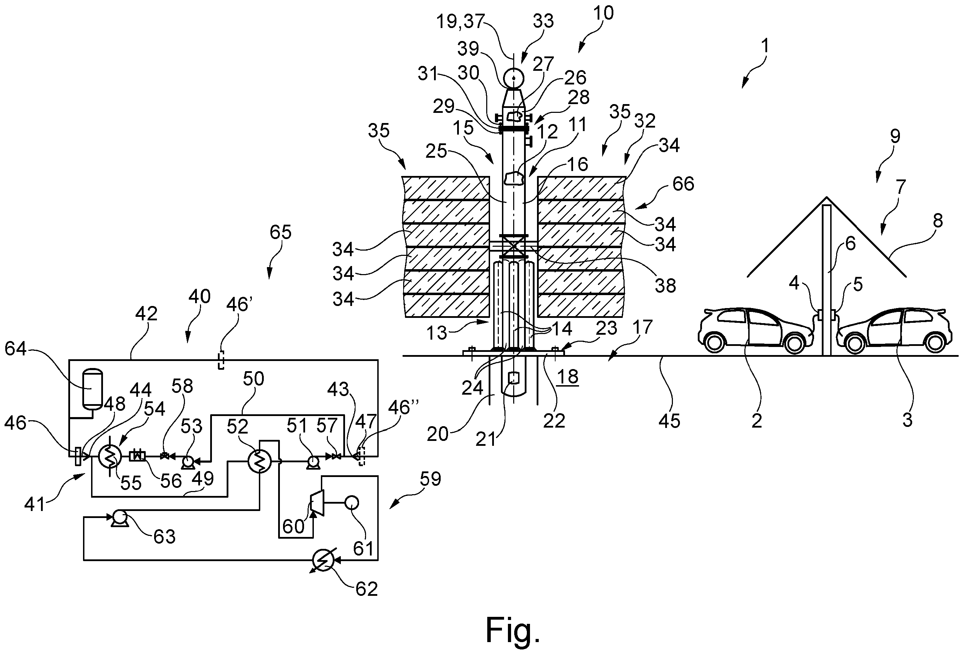

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Energiebereitstellungseinrichtung für zumindest ein Kraftfahrzeug.

Die Figur zeigt eine schematische Darstellung einer Energiebereitstellungseinrichtung 1 sowie ein erstes Kraftfahrzeug 2 und ein zweites Kraftfahrzeug 3. Das erste Kraftfahrzeug 2 ist an einen Stromanschluss 4 der Energiebereitstellungseinrichtung 1 elektrisch angeschlossen, das zweite Kraftfahrzeug 3 an einen Wasserstoffanschluss 5 strömungstechnisch angeschlossen. Eine solche Anschlusskonfiguration ist selbstredend rein exemplarisch zu verstehen. Über den Stromanschluss 4 wird dem ersten Kraftfahrzeug 2 elektrischer Strom von der Energiebereitstellungseinrichtung 1 zugeführt. Analog hierzu wird dem zweiten Kraftfahrzeug 3 über den Wasserstoffanschluss 5 Wasserstoff zugeführt. Der Stromanschluss 4 und der Wasserstoffanschluss 5 sind beispielsweise an einer oder mehreren Zapfsäulen 6 angeordnet, wobei in dem hier dargestellten Ausführungsbeispiel der Stromanschluss 4 und der Wasserstoffanschluss 5 an einer gemeinsamen Zapfsäule 6 vorliegen. Die Zapfsäule 6 kann mit einem Dach 7 versehen sein, welches beispielsweise wenigstens ein Solarmodul 8 einer Stromerzeugungseinrichtung 9 trägt.

Die Energiebereitstellungseinrichtung 1 weist weiterhin eine Fluidspeichervorrichtung 10 auf. Diese verfügt wiederum über eine erste Tankanordnung 11 mit einem ersten Speichertank 12 sowie über eine zweite Tankanordnung 13 mit mehreren zweiten Speichertanks 14. Der erste Speichertank 12 ist in einem Speicherturm 15 ausgebildet, welcher aus wenigstens einem zylindrischen, insbesondere kreiszylindrischen Rohr 16 zusammengesetzt ist. Der Speicherturm 15 ist mittels einer ein Fundament 17 aufweisenden Gründung in einem Untergrund 18 verankert. Der Speicherturm 15 ist hierbei derart ausgestaltet, dass er in die Gründung hineinragt. Bevorzugt ist das Fundament 17 in radialer Richtung bezüglich einer Längsmittelachse 19 des Speicherturms 15 von diesem beabstandet angeordnet, sodass eine Ausnehmung 20 in dem Fundament 17 vorliegt, in welche der Speicherturm 15 endseitig eingreift.

In die Ausnehmung 20 mündet eine Zugangsöffnung 21 des Speicherturms 15 ein, welche als Mannloch ausgestaltet ist und entsprechende Abmessungen aufweist. Die Ausnehmung 20 beziehungsweise das Fundament 17 wird von einer Bodenplatte 22 übergriffen, welche vorzugsweise mittels einer Schraubverbindung 23 an dem Fundament 17 befestigt ist, welche der Gründung zugeordnet ist. Der Speicherturm 15 ist vorzugsweise an der Bodenplatte 22 befestigt. Zusätzlich oder alternativ gilt dies für die zweiten Speichertanks 14. Diese stützen sich beispielsweise endseitig an der Bodenplatte 22 ab.

Die zweiten Speichertanks 14 sind um den Speicherturm 15 verteilt angeordnet und zu dessen Versteifung an ihm befestigt. Hierzu sind die zweiten Speichertanks 14 beispielsweise in axialer Richtung durchgehend an dem Speicherturm 15 befestigt, beispielsweise durch Schweißen. An den zweiten Speichertanks 14 können wiederum weitere zweite Speichertanks 24 befestigt sein, vorzugsweise derart, dass sie beabstandet von dem Speicherturm 15 vorliegen. Das bedeutet, dass die weiteren zweiten Speichertanks 24 lediglich über die zweiten Speichertanks 14 an dem Speicherturm 15 angreifen. Der Speicherturm 15 weist einen Grundkörper 25 auf, an welchem die zweiten Speichertanks 14 befestigt sind und in welchem der erste Speichertank 12 ausgebildet ist. An dem Grundkörper 25 ist ein Abschlusselement 26 befestigt, welches wenigstens bereichsweise konisch ist. In dem Abschlusselement 26 ist ein dritter Speichertank 27 für ein drittes Fluid angeordnet beziehungsweise ausgebildet.

Der Grundkörper 25 und das Abschlusselement 26 sind über eine Flanschbefestigung 28 aneinander befestigt. Hierzu weist der Grundkörper 25 einen ersten Anschlussflansch 29 und das Abschlusselement 26 einen zweiten Anschlussflansch 30 auf. Die beiden Anschlussflansche 29 und 30 sind über eine Trennwand 31 miteinander verbunden, wobei die Trennwand 31 einerseits den ersten Speichertank 12 und andererseits den dritten Speichertank 27 begrenzt. Beispielsweise ist die Trennwand 31 gekrümmt, insbesondere kugelkalottenförmig gekrümmt, und ragt in den dritten Speichertank 27 hinein. Vor diesem Hintergrund ist der erste Speichertank 12 als Drucktank und der dritte Speichertank 27 als druckloser Tank ausgestaltet. Beispielsweise ist der erste Speichertank 12 druckfest bis mindestens 100 bar, mindestens 150 bar, mindestens 200 bar, mindestens 250 bar oder mindestens 300 bar. Das in dem dritten Speichertank 27 vorliegende dritte Fluid weist hingegen einen Druck auf, welcher einem Umgebungsdruck genau oder zumindest näherungsweise entspricht.

Zusätzlich zu der Fluidspeichervorrichtung 10 verfügt die Energiebereitstellungseinrichtung 1 über eine Solarnutzungseinrichtung 32 sowie eine Windkraftanlage 33. Die Solarnutzungseinrichtung 32 weist wenigstens einen Solarkollektor 34, vorzugsweise eine Vielzahl von Solarkollektoren 34 auf. In dem hier dargestellten Ausführungsbeispiel sind lediglich einige Solarkollektoren 34 beispielhaft gekennzeichnet. Zusätzlich oder alternativ zu dem wenigstens einen Solarkollektor 34 kann wenigstens ein (weiteres) Solarmodul vorliegen. Die nachfolgenden Ausführungen hinsichtlich der Anordnung des Solarkollektors 34 sind für die Anordnung eines solchen (weiteren) Solarmoduls entsprechend heranziehbar.

Die Solarkollektoren 34 sind in dem hier dargestellten Ausführungsbeispiel an zwei Paneelen 35 befestigt, welche auf gegenüberliegenden Seiten des Speicherturms 15 angeordnet sind. Die Paneele 35 sind über eine Schwenkeinrichtung 36 um wenigstens eine Schwenkachse schwenkbar an dem Speicherturm 15 gelagert. In dem hier dargestellten Ausführungsbeispiel sind die Paneele 35 mittels der Schwenkeinrichtung 36 um mehrere verschiedene Schwenkachsen schwenkbar, nämlich um eine Schwenkachse 37, die der Längsmittelachse 19 des Speicherturms 15 entspricht, und um eine Schwenkachse 38, welche senkrecht auf einer die Schwenkachse 37 aufnehmenden Ebene steht. Das Verschwenken um die mehreren Schwenkachsen 37 und 38 ermöglicht ein präzises Ausrichten der Solarkollektoren 34 zur Sonne.

Die Windkraftanlage 33 ist mittels einer Stützanordnung 39 an dem Speicherturm 15 befestigt, insbesondere an dessen dem Fundament 17 abgewandten Seite. Vorzugsweise schließt sich die Stützanordnung 39 an das Abschlusselement 26 an, insbesondere ist sie über dieses an dem Grundkörper 25 des Speicherturms 15 befestigt. Die Fluidspeichervorrichtung 10 beziehungsweise ihr Speicherturm 15 dient insoweit nicht nur der Zwischenspeicherung von Fluiden, sondern zudem der Anordnung und Befestigung der Solarnutzungseinrichtung 32 sowie der Windkraftanlage 33. Selbstverständlich sind auch Ausführungsformen realisierbar, bei welchem die Solarnutzungseinrichtung 32 oder die Windkraftanlage 33 entfällt, sodass lediglich die jeweils andere Einrichtung beziehungsweise Anlage verbleibt.

Die Energiebereitstellungseinrichtung 1 verfügt weiterhin über einen thermischen Energiespeicher 40, der zur Zwischenspeicherung von thermischer Energie beziehungsweise Wärme dient. Der Energiespeicher 40 verfügt über einen geschlossenen Speicherkreislauf 41. In dem Speicherkreislauf 41 ist ein Fluidbehälter 42 vorgesehen, welcher hier in Form einer Rohrleitung ausgestaltet ist. Der Fluidbehälter 42 weist einen ersten Fluidanschluss 43 und einen zweiten Fluidanschluss 44 auf. Der Fluidbehälter 42 beziehungsweise die Rohrleitung, die den Fluidbehälter 42 ausbildet, kann grundsätzlich beliebig ausgestaltet sein. Beispielsweise weist sie bezüglich ihrer Längsmittelachse einen Kreisquerschnitt auf, wobei die Längsmittelachse beliebig geformt sein kann. In der hier dargestellten Ausführungsform weisen die Längsmittelachse und mithin auch der Fluidbehälter 42 eine C-Form auf. Die Längsmittelachse ist insoweit wenigstens bereichsweise oder sogar durchgehend gekrümmt.

Die nicht speziell gekennzeichnete Längsmittelachse des Fluidbehälters 42 ist in der hier dargestellten Ausführungsform vorzugsweise waagerecht angeordnet, insbesondere also parallel zu einem Untergrund 45, auf welchem oder - in dem hier dargestellten Ausführungsbeispiel - unter welchem der thermische Energiespeicher 40 wenigstens bereichsweise, insbesondere vollständig, angeordnet ist. Anders ausgedrückt kann es vorgesehen sein, dass die Längsmittelachse senkrecht zu einem Schwerkrafteinfluss beziehungsweise einem Schwerkraftvektor vorliegt. Die Fluidanschlüsse 43 und 44 sind vorzugsweise Ausnehmungen in einer Wandung des Fluidbehälters 42, welche geringere Abmessungen aufweisen als der Fluidbehälter 42 im Querschnitt. Beispielsweise liegen die Fluidanschlüsse 43 und 44 an Stirnseiten des Fluidbehälters 42 beziehungsweise der Rohrleitung vor, insbesondere an gegenüberliegenden Stirnseiten. In dem Fluidbehälter 42 ist ein Trennelement 46 verlagerbar angeordnet, wobei weitere mögliche Anordnungen des Trennelements 46 durch die Bezugszeichen 46' und 46" gekennzeichnet sind. Das Trennelement 46 trennt den Fluidbehälter 42 in eine erste Fluidspeicherkammer 47 und eine zweite Fluidspeicherkammer 48.

Auf der dem Fluidbehälter 42 abgewandten Seite der Fluidanschlüsse 43 und 44 sind zwischen diesen ein erster Fluidstrang 49 und ein zweiter Fluidstrang 50 strömungstechnisch angeschlossen. In dem ersten Fluidstrang 49 liegt eine Pumpe 51 vor, die als Speicherentladepumpe ausgebildet ist, sowie ein Wärmeverbraucher 52, der als Wärmeübertrager ausgebildet ist. Der zweite Fluidstrang 50 dagegen verfügt über eine Pumpe 53, die als Speicherladepumpe ausgestaltet ist, sowie eine Wärmequelle 54. Die Wärmequelle 54 verfügt beispielsweise über einen Wärmeübertrager 55 sowie eine elektrische Heizeinrichtung 56. Jedem der Fluidstränge 49 und 50 kann zudem ein Ventil 57 beziehungsweise 58 zugeordnet sein. Die Heizreinrichtung 56 ist vorzugsweise mit elektrischem Strom beaufschlagbar, welcher mittels der Windkraftanlage 33 erzeugt wurde. Die elektrische Energie beziehungsweise der elektrische Strom wird insoweit zum Erwärmen des Wärmeträgermediums verwendet.

Der Wärmeverbraucher 52 dient zur thermischen Kopplung des Speicherkreislaufs 41 an einen Arbeitskreislauf 59. In dem Arbeitskreislauf 39 liegt ein Arbeitsfluid vor, welches sowohl den Wärmeverbraucher 52 beziehungsweise den Wärmetauscher sowie eine Dampfturbine 60 durchströmt beziehungsweise durchströmen kann. Mit der Dampfturbine 60 ist ein Generator 61 antriebstechnisch gekoppelt. Zusätzlich zu dem Wärmeverbraucher 52 und der Dampfturbine 60 liegen in dem Arbeitskreislauf 49 beispielsweise ein Kondensator 62 sowie eine Pumpe 63 vor. Alternativ ist es selbstverständlich möglich, den Arbeitskreislauf 59 als Teil des Speicherkreislaufs 41 auszubilden. In diesem Fall liegt der Wärmeverbraucher 52 nicht als Wärmetauscher sondern beispielsweise als die Dampfturbine 60 vor, um unmittelbar mit dem in dem Speicherkreislauf 41 vorliegenden Fluid beziehungsweise Wärmeträgermedium mechanische Energie beziehungsweise elektrische Energie zu erzeugen.

Der Wärmeübertrager 55 dient beispielsweise einer thermischen Kopplung des Speicherkreislaufs 41 an einen Solarkreislauf, in welchem bevorzugt der wenigstens eine Solarkollektor 34 vorliegt. Selbstverständlich kann es auch vorgesehen sein, dass der Wärmeübertrager 55 der wenigstens eine Solarkollektor 34 selbst ist und insoweit das in dem Speicherkreislauf 41 vorliegende Fluid, welches auch als Wärmeträgermedium bezeichnet werden kann, bei einem Durchströmen des zweiten Fluidstrangs 50 den wenigstens einen Solarkollektor 34 durchströmt. Erkennbar ist zudem, dass der Speicherkreislauf 41 über wenigstens einen Ausgleichsbehälter 64 verfügt, welcher beispielsweise an dem Fluidbehälter 42 fluidtechnisch angeschlossen ist. Das Trennelement 46 ist in dem Fluidbehälter 42 verlagerbar angeordnet, sodass das Volumen der ersten Fluidspeicherkammer 47 und das Volumen der zweiten Fluidspeicherkammer 48 variabel sind. Insbesondere ergibt die Summe aus den Volumina der beiden Fluidspeicherkammern 47 und 48 jedoch unabhängig von der Position des Trennelements 46 stets ein Gesamtvolumen des Fluidbehälters 42, welches zur Aufnahme des Fluids beziehungsweise Wärmeträgermediums zur Verfügung steht.

Bei einem Betreiben des thermischen Energiespeichers 40 kann nun entweder ein Beladen, also das Zuführen von thermischer Energie, oder ein Entladen, also das Entnehmen von thermischer Energie, vorgesehen sein. Zum Beladen des Energiespeichers 40 mit thermischer Energie wird die Speicherladepumpe 53 betrieben, sodass Fluid entlang des zweiten Fluidstrangs 50 gefördert wird. Dazu wird das Ventil 58 geöffnet. Vorzugsweise wird gleichzeitig das Ventil 57 geschlossen. Das Trennelement 46 befindet sich zunächst in der durch das Bezugszeichen 46 gekennzeichneten Stellung.

Durch das Betreiben der Speicherladepumpe 53 wird das Fluid aus der ersten Fluidspeicherkammer 47 entnommen und durch die Wärmequelle 44 hindurch in die zweite Fluidspeicherkammer 48 gepumpt. Durch den dabei in den Fluidspeicherkammern 47 und 48 entstehenden Druckunterschied wird das Trennelement 46 verlagert. Entsprechend nimmt das Volumen der zweiten Fluidspeicherkammer 48 zu, während das Volumen der ersten Fluidspeicherkammer 47 abnimmt. Das Trennelement 46 wird also in Richtung der durch die Bezugszeichen 46' und 46" angedeuteten Positionen verlagert.

Die Speicherladepumpe 43 wird vorzugsweise solange betrieben, wie mittels der Wärmequelle 54 Wärme beziehungsweise thermische Energie bereitgestellt werden kann oder bis der Energiespeicher 40 maximal mit thermischer Energie beladen ist, das gesamte in dem Fluidbehälter 42 vorliegende Fluid also die maximale Temperatur erreicht hat. In letzterem Fall liegt das Trennelement 46 in der durch das Bezugszeichen 46" gekennzeichneten Stellung vor. Nun wird die Speicherladepumpe 53 außer Betrieb gesetzt und vorzugsweise das Ventil 58 geschlossen.

Soll dem Energiespeicher 40 die nunmehr zwischengespeicherte thermische Energie entnommen werden, so wird die Speicherentladepumpe 51 betrieben und das Ventil 57 geöffnet. Vorzugsweise wird gleichzeitig das Ventil 58 geschlossen, sollte dies noch nicht der Fall sein. Durch das Betreiben der Speicherentladepumpe 51 wird Fluid aus der zweiten Fluidspeicherkammer entnommen und durch den Wärmeverbraucher 52 in die erste Fluidspeicherkammer 47 gefördert. Entsprechend verändern sich das Volumen der ersten Fluidspeicherkammer 47 und das Volumen der zweiten Fluidspeicherkammer 48 nun in umgekehrter Weise bezüglich der vorstehenden Ausführungen.

In dem Wärmeverbraucher 52 wird das aus der zweiten Fluidspeicherkammer 48 entnommene Fluid abgekühlt. Die dem Fluid dabei entnommene thermische Energie dient dem Aufheizen, insbesondere dem Verdampfen und/oder Überhitzen, des in dem Arbeitskreislauf 59 vorliegende Arbeitsfluids. Zusätzlich oder alternativ ist es vorgesehen, dem Arbeitskreislauf 59 unmittelbar thermische Energie des wenigstens einen Solarkollektors 34 zuzuführen. Das erhitzte Arbeitsfluid kann nachfolgend zum Erzeugen von mechanischer Energie und letztendlich elektrischer Energie herangezogen werden. Das Entladen des Energiespeichers 40 erfolgt beispielsweise solange, wie der Wärmeverbraucher 52 thermische Energie benötigt oder bis die zweite Fluidspeicherkammer 48 vollständig entleert ist, das Trennelement 46 sich also in der durch das Bezugszeichen 46 gekennzeichneten Stellung befindet.

Eine derartige Ausgestaltung des Energiespeichers 40 hat den Vorteil, dass der Bauraum des Fluidbehälters 42 vergleichsweise gering ist. Insbesondere muss kein leerer Speicherbehälter vorgehalten werden, um das aufgeheizte oder abgekühlte Fluid aufzunehmen. Gleichzeitig ermöglicht das Trennelement 46 eine vollständige oder zumindest nahezu vollständige Trennung des in der ersten Fluidspeicherkammer 47 vorliegenden kälteren Fluid von dem in der zweiten Fluidspeicherkammer 48 vorliegenden wärmeren Fluid. Eine Vermischung des wärmeren Fluids mit dem kälteren Fluid und eine damit einhergehende Abkühlung werden somit vermieden. Entsprechend steht das wärmere Fluid stets mit einer hohen Temperatur zur Verfügung, was das Betreiben des Arbeitskreislaufs 59 mit einer hohen Effizienz ermöglicht.

Der thermische Energiespeicher 40 ist Bestandteil einer Stromquelle 65, die zusätzlich über die Stromerzeugungseinrichtung 9 verfügt. Die Stromerzeugungseinrichtung 9 weist wiederum das bereits erwähnte Solarmodul 8 sowie die Windkraftanlage 33 auf. Auch eine Solarkollektoreinrichtung 66, welche den wenigstens einen Solarkollektor 34 aufweist, ist Bestandteil der Stromquelle 65. Dies gilt im Übrigen auch für den Arbeitskreislauf 59 mit der Dampfturbine 60. Der an dem eingangs bereits erwähnten Stromanschluss 4 bereitgestellte elektrische Strom wird von der Stromquelle 65 bereitgestellt. Der an dem Wasserstoffanschluss 5 bereitgestellte Wasserstoff wird hingegen dem ersten Speichertank 12 entnommen, welcher insoweit auch als Wasserstoffspeicher bezeichnet werden kann.

Der in dem ersten Speichertank 12 gespeicherte Wasserstoff wird durch Elektrolyse aus Wasser unter Verwendung von elektrischem Strom aus der Stromquelle 65 gewonnen. Der bei der Elektrolyse ebenfalls entstehende Sauerstoff wird in der zweiten Tankanordnung 13 beziehungsweise dem wenigstens einen zweiten Speichertank 14 und/oder dem wenigstens einen weiteren zweiten Speichertank 24 zwischengespeichert. Das für die Elektrolyse benötigte Wasser wird dem dritten Speichertank 27 entnommen, welcher insoweit auch als Wassertank bezeichnet werden kann.

Der mittels der Stromquelle 65 bereitgestellte elektrische Strom wird zumindest zeitweise mittels der Windkraftanlage 33 und/oder des Solarmoduls 8 bereitgestellt und/oder mittels der in dem thermischen Energiespeicher 40 zwischengespeicherten thermischen Energie erzeugt. Die in dem Energiespeicher 40 zwischengespeicherte thermische Energie wird vorzugsweise mittels der Solarkollektoreinrichtung 26 beziehungsweise des wenigstens einen Solarkollektors 34 bereitgestellt und in den thermischen Energiespeicher 40 eingebracht. Dies erfolgt beispielsweise mithilfe des Wärmeübertragers 55 oder mittels eines direkten Durchströmens der Solarkollektoreinrichtung 26 durch das in dem Energiespeicher 40 verwendete Wärmeträgermedium. Zusätzlich oder alternativ kann elektrischer Strom zum Beladen des thermischen Energiespeichers 40 verwendet werden, nämlich durch Betreiben der elektrischen Heizeinrichtung 56 mit elektrischem Strom, also beispielsweise mit elektrischem Strom, welcher mittels der Windkraftanlage 33 und/oder des Solarmoduls 8 bereitgestellt wird.

Die beschrieben Energiebereitstellungseinrichtung 1 hat den Vorteil, dass Energie für die Kraftfahrzeuge 2 und 3 auf unterschiedlichen Wegen bereitstellbar ist, nämlich einerseits in Form von elektrischer Energie und andererseits in Form von chemischer Energie. Das Bereitstellen der Energie ist zudem trotz der Verwendung von regenerativen Energiequellen weitgehend unabhängig von Umgebungsbedingungen, weil mittels des Energiespeichers 40 Zeiträume überbrückbar sind, in welchen mittels der Windkraftanlage 33 und/oder des Solarmoduls 8 kein elektrischer Strom bereitstellbar ist. Hierzu weist der Energiespeicher 40 eine entsprechende Speicherkapazität auf.

Von Vorteil ist zudem, dass der an dem Wasserstoffanschluss 5 bereitgestellte Wasserstoff lokal erzeugt wird, also nicht mittels eines separaten Transportmittels zu der Energiebereitstellungsrichtung 1 transportiert werden muss. Entsprechend wird mittels der Energiebereitstellungseinrichtung 1 die elektrische Energie und die chemische Energie CO₂-neutral zur Verfügung gestellt. Der erste Speichertank 12 weist vorzugsweise ein Speichervolumen von mindestens 5.000 m³ oder mindestens 10.000 m³ auf. Der Wasserstoff wird bevorzugt bei etwa 180 bar in dem ersten Speichertank 12 gespeichert. Die Energiebereitstellungseinrichtung 1 ist dazu vorgesehen und ausgebildet, den Wasserstoff an dem Wasserstoffanschluss 5 mit einem Massenstrom vom mindestens 1.500 m³/h bei einem Druck von 750 bar bereitzustellen. An dem Stromanschluss 4 kann der elektrische Strom mit einer Leistung von mindestens 500 kW bereitgestellt werden. Entsprechend sind mehrere Kraftfahrzeuge 2 und 3 gleichzeitig mit elektrischem Strom und/oder mit Wasserstoff versorgbar.

## Patentansprüche

1. Verfahren zum Betreiben einer Energiebereitstellungseinrichtung (1) für zumindest ein Kraftfahrzeug (2,3), wobei an einem Stromanschluss (4) der Energiebereitstellungseinrichtung (1) zumindest zeitweise elektrischer Strom aus einer Stromquelle (65) und an einem Wasserstoffanschluss (5) der Energiebereitstellungseinrichtung (1) zumindest zeitweise Wasserstoff aus einem Wasserstoffspeicher (12) zum Übertragen an das zumindest eine Kraftfahrzeug (2,3) bereitgestellt wird, wobei der Wasserstoff durch Elektrolyse aus Wasser unter Verwendung von elektrischem Strom aus der Stromquelle (65) gewonnen wird, wobei die Stromquelle (65) einen thermischen Energiespeicher (40) zum Zwischenspeichern von thermischer Energie aufweist, **dadurch gekennzeichnet, dass** die thermische Energie in dem Energiespeicher (40) mittels eines durchgehend in flüssigem Zustand vorliegenden Wärmeträgermediums gespeichert wird, wobei die in dem thermischen Energiespeicher (40) zwischengespeicherte thermische Energie zumindest zeitweise zum Bereitstellen des elektrischen Stroms verwendet wird, der zumindest zeitweise zum Durchführen der Elektrolyse herangezogen wird, wobei der Wasserstoff bei einer Entnahme über den Wasserstoffanschluss (5) aus dem Wasserstoffspeicher (12) bereitgestellt wird, dessen Füllstand während der Entnahme auf einen Sollfüllstand geregelt wird, indem dem Wasserstoffspeicher (12) durch die Elektrolyse gewonnener Wasserstoff zugeführt wird.

2. Verfahren nach Anspruch 1, **dadurch gekennzeichnet, dass** die Stromquelle (65) wenigstens eine Stromerzeugungseinrichtung (9) zum regenerativen Bereitstellen von elektrischem Strom aufweist, wobei der mittels der Stromerzeugungseinrichtung (9) bereitgestellte elektrische Strom zumindest zeitweise an dem Stromanschluss (4) bereitgestellt und zumindest zeitweise zum Gewinnen des Wasserstoffs durch Elektrolyse verwendet wird.

3. Verfahren nach einem der vorhergehenden Ansprüche, **dadurch gekennzeichnet, dass** der mittels der Stromerzeugungseinrichtung (9) bereitgestellte elektrische Strom zumindest zeitweise zum Erwärmen des Wärmeträgermediums mittels einer Heizeinrichtung (56) verwendet wird.

4. Verfahren nach einem der vorhergehenden Ansprüche, **dadurch gekennzeichnet, dass** die Stromerzeugungseinrichtung (9) den elektrischen Strom mittels wenigstens einer Windkraftanlage (33) und/oder eines Solarmoduls (8) bereitstellt.

5. Verfahren nach einem der vorhergehenden Ansprüche, **dadurch gekennzeichnet, dass** die Stromquelle (65) wenigstens eine Solarkollektoreinrichtung (66) aufweist, die zumindest zeitweise zum Erwärmen des Wärmeträgermediums und/oder dem Bereitstellen des elektrischen Stroms mittels solarer Wärme betrieben wird.

6. Verfahren nach einem der vorhergehenden Ansprüche, **dadurch gekennzeichnet, dass** das Bereitstellen des elektrischen Stroms unter Verwendung der thermischen Energie und/oder der solaren Wärme mittels wenigstens einer Dampfturbine (60) erfolgt.

7. Verfahren nach einem der vorhergehenden Ansprüche, **dadurch gekennzeichnet, dass** bei einer Entnahme von elektrischem Strom über den Stromanschluss (4) mit einer Entnahmeleistung der elektrische Strom bis zu einer Leistungsgrenze mittels der Stromerzeugungseinrichtung (9) bereitgestellt wird und bei Überschreiten der Leistungsgrenze durch die Entnahmeleistung elektrische Energie mit einer Differenz zwischen der Entnahmeleistung und der Leistungsgrenze entsprechenden Differenzleistung mittels der in dem thermischen Energiespeicher (40) zwischengespeicherten thermischen Energie und/oder mittels des in dem Wasserstoffspeicher (12) zwischengespeicherten Wasserstoffs zusätzlich bereitgestellt wird.

8. Energiebereitstellungseinrichtung (1) für zumindest ein Kraftfahrzeug (2,3), insbesondere zur Durchführung des Verfahrens nach einem oder mehreren der vorhergehenden Ansprüche, wobei die Energiebereitstellungseinrichtung (1) dazu vorgesehen und ausgebildet ist, an einem Stromanschluss (4) der Energiebereitstellungseinrichtung (1) zumindest zeitweise elektrischen Strom aus einer Stromquelle (65) und an einem Wasserstoffanschluss (5) der Energiebereitstellungseinrichtung (1) zumindest zeitweise Wasserstoff aus einem Wasserstoffspeicher (12) zur Übertragung an das zumindest eine Kraftfahrzeug (2,3) bereitzustellen, wobei der Wasserstoff durch Elektrolyse aus Wasser unter Verwendung von elektrischem Strom aus der Stromquelle (65) gewonnen wird,
wobei die Stromquelle (65) einen thermischen Energiespeicher (40) zum Zwischenspeichern von thermischer Energie aufweist, **dadurch gekennzeichnet, dass** die thermische Energie in dem Energiespeicher (40) mittels eines durchgehend in flüssigem Zustand vorliegenden Wärmeträgermediums gespeichert wird, wobei die in dem thermischen Energiespeicher (40) zwischengespeicherte thermische Energie zumindest zeitweise zum Bereitstellen des elektrischen Stroms verwendet wird, der zumindest zeitweise zum Durchführen der Elektrolyse herangezogen wird, wobei der Wasserstoff bei einer Entnahme über den Wasserstoffanschluss (5) aus dem Wasserstoffspeicher (12) bereitgestellt wird, dessen Füllstand während der Entnahme auf einen Sollfüllstand geregelt wird, indem dem Wasserstoffspeicher (12) durch die Elektrolyse gewonnener Wasserstoff zugeführt wird.

## Claims

1. Method for operating an energy supply device (1) for at least one motor vehicle (2, 3), wherein at least temporarily electric power from a power source (65) is provided at a power connection (4) of the energy supply device (1) and at least temporarily hydrogen from a hydrogen store (12) is provided at a hydrogen connection (5) of the energy supply device (1) for transfer to the at least one motor vehicle (2, 3), wherein the hydrogen is obtained by electrolysis from water using electric power from the power source (65), wherein the power source (65) comprises a thermal energy store (40) for temporarily storing thermal energy **characterised in that** the thermal energy is stored in the energy store (40) by means of a heat transfer medium which is in a liquid state throughout, wherein the thermal energy temporarily stored in the thermal energy store (40) is used at least temporarily to provide the electric power, which is used at least temporarily to carry out the electrolysis, wherein the hydrogen being withdrawn via the hydrogen connection (5) is provided from the hydrogen store (12), the filling level of which is regulated during the withdrawal to a desired filling level by hydrogen obtained by the electrolysis being fed to the hydrogen store (12).

2. Method according to claim 1, **characterized in that** the power source (65) comprises at least one power generating device (9) for regeneratively providing electric power, wherein the electric power provided by means of the power generating device (9) is at least temporarily provided at the power connection (4) and at least temporarily used for obtaining the hydrogen by electrolysis.

3. Method according to one of the preceding claims, **characterised in that** the electric power provided by means of the power generating device (9) is at least temporarily used to heat the heat transfer medium by means of a heating device (56).

4. Method according to one of the preceding claims, **characterised in that** the power generating device (9) provides the electric power by means of at least one wind turbine (33) and/or solar module (8).

5. Method according to any one of the preceding claims, **characterised in that** the power source (65) comprises at least one solar collector device (66), which is operated at least temporarily for heating the heat transfer medium and/or providing the electric power by means of solar heat.

6. Method according to any one of the preceding claims, **characterised in that** providing the electric power by the thermal energy and/or the solar heat is carried out by means of at least one steam turbine (60).

7. Method according to one of the preceding claims, **characterized in that**, when electrical power is withdrawn via the power connection (4) with a withdrawal power, the electrical power is provided up to a power limit by means of the power generating device (9) and, when the power limit is exceeded by the withdrawal power, electrical energy with a differential power corresponding to the difference between the withdrawal power and the power limit is additionally provided by means of the thermal energy temporarily stored in the thermal energy store (40) and/or by means of the hydrogen temporarily stored in the hydrogen store (12).

8. Energy supply device (1) for at least one motor vehicle (2, 3), in particular for carrying out the method according to one or more of the preceding claims, wherein the energy supply device (1) is provided and designed to at least temporarily provide electric power from a power source (65) at a power connection (4) of the energy supply device (1) and at least temporarily provide hydrogen from a hydrogen storage device (12) at a hydrogen connection (5) of the energy supply device (1) for transfer to the at least one motor vehicle (2, 3), wherein the hydrogen is obtained by electrolysis from water using electric power from the power source (65), wherein the power source (65) comprises a thermal energy store (40) for temporarily storing thermal energy, **characterised in that** the thermal energy is stored in the energy store (40) by means of a heat transfer medium which is in a liquid state throughout, wherein the thermal energy temporarily stored in the thermal energy storage (40) is used at least temporarily to provide the electric power, which is used at least temporarily to carry out the electrolysis, wherein the hydrogen being withdrawn via the hydrogen connection (5) is provided from the hydrogen store (12), the filling level of which is regulated during the withdrawal to a desired filling level by hydrogen obtained by the electrolysis being fed to the hydrogen store (12).

## Revendications

1. Procédé de fonctionnement d'un dispositif de mise à disposition d'énergie (1) pour au moins un véhicule automobile (2, 3), dans lequel, sur un raccordement électrique (4) du dispositif de mise à disposition d'énergie (1), du courant électrique est fourni au moins temporairement par une source de courant (65) et, sur un raccordement d'hydrogène (5) du dispositif de mise à disposition d'énergie (1), de l'hydrogène est fourni au moins temporairement par un réservoir d'hydrogène (12) pour être transféré au au moins un véhicule automobile (2, 3), l'hydrogène étant obtenu par électrolyse à partir d'eau en utilisant du courant électrique provenant de la source de courant (65), la source de courant (65) présentant un accumulateur d'énergie thermique (40) pour stocker temporairement d'énergie thermique, **caractérisé en ce que** l'énergie thermique est stockée dans l'accumulateur d'énergie (40) au moyen d'un médium caloporteur se trouvant en permanence à l'état liquide, dans laquelle l'énergie thermique stockée temporairement dans l'accumulateur d'énergie thermique (40) est utilisée au moins temporairement pour fournir le courant électrique, qui est utilisé au moins temporairement pour réaliser l'électrolyse, dans laquelle l'hydrogène est mis à disposition lors d'un prélèvement via le raccordement d'hydrogène (5) à partir du réservoir d'hydrogène (12), dont le niveau de remplissage est régulé pendant le prélèvement à un niveau de remplissage de consigne, en amenant au réservoir d'hydrogène (12) de l'hydrogène obtenu par l'électrolyse.

2. Procédé selon la revendication 1, **caractérisé en ce que** la source de courant (65) présente au moins un dispositif de génération de courant (9) pour la mise à disposition régénérative de courant électrique, le courant électrique mis à disposition au moyen du dispositif de génération de courant (9) étant mis à disposition au moins temporairement sur le raccordement électrique (4) et étant utilisé au moins temporairement pour obtenir l'hydrogène par électrolyse.

3. Procédé selon l'une des revendications précédentes, **caractérisé en ce que** le courant électrique fourni au moyen du dispositif de génération de courant (9) est utilisé au moins temporairement pour chauffer le médium caloporteur au moyen d'un dispositif de chauffage (56).

4. Procédé selon l'une des revendications précédentes, **caractérisé en ce que** le dispositif de génération de courant (9) fournit le courant électrique au moyen d'au moins une éolienne (33) et/ou d'un panneau solaire (8).

5. Procédé selon l'une des revendications précédentes, **caractérisé en ce que** la source de courant (65) présente au moins un dispositif collecteur solaire (66) qui fonctionne au moins temporairement pour chauffer le médium caloporteur et/ou fournir le courant électrique au moyen de la chaleur solaire.

6. Procédé selon l'une quelconque des revendications précédentes, **caractérisé en ce que** la mise à disposition du courant électrique en utilisant l'énergie thermique et/ou la chaleur solaire est effectuée au moyen d'au moins une turbine à vapeur (60).

7. Procédé selon l'une des revendications précédentes, **caractérisé en ce que**, lors d'un prélèvement de courant électrique par l'intermédiaire du raccordement électrique (4) avec une puissance de prélèvement, le courant électrique est mis à disposition jusqu'à une limite de puissance au moyen du dispositif de génération de courant (9) et, en cas de dépassement de la limite de puissance par la puissance de prélèvement, d'énergie électrique avec une différence entre la puissance de prélèvement et la puissance différentielle correspondant à la limite de puissance est mise à disposition en supplément au moyen de l'énergie thermique stockée temporairement dans l'accumulateur d'énergie thermique (40) et/ou au moyen de l'hydrogène stocké temporairement dans le réservoir d'hydrogène (12).

8. Dispositif de mise à disposition d'énergie (1) pour au moins un véhicule automobile (2, 3), notamment pour la réalisation du procédé selon une ou plusieurs des revendications précédentes, dans lequel le dispositif de mise à disposition d'énergie (1) est prévu et conçu à cet effet, à mettre à disposition sur un raccordement électrique (4) du dispositif de mise à disposition d'énergie (1), au moins temporairement, du courant électrique provenant d'une source de courant (65) et, sur un raccordement d'hydrogène (5) du dispositif de mise à disposition d'énergie (1), au moins temporairement, de l'hydrogène provenant d'un réservoir d'hydrogène (12) en vue de sa transmission à l'au moins un véhicule automobile (2, 3), l'hydrogène étant obtenu par électrolyse à partir d'eau en utilisant du courant électrique provenant de la source de courant (65), la source de courant (65) présentant un accumulateur d'énergie thermique (40) pour stocker temporairement de l'énergie thermique, **caractérisé en ce que** l'énergie thermique est stockée dans l'accumulateur d'énergie (40) au moyen d'un médium caloporteur se trouvant en permanence à l'état liquide, l'énergie thermique stockée temporairement dans l'accumulateur d'énergie thermique (40) étant utilisée au moins temporairement pour mettre à disposition le courant électrique, qui est utilisé au moins temporairement pour réaliser l'électrolyse, dans laquelle l'hydrogène est mis à disposition lors d'un prélèvement via le raccord d'hydrogène (5) à partir du réservoir d'hydrogène (12), dont le niveau de remplissage est régulé pendant le prélèvement à un niveau de remplissage de consigne, en amenant au réservoir d'hydrogène (12) de l'hydrogène obtenu par l'électrolyse.
